# EUROPÄISCHE PATENTSCHRIFT

(11) **EP 3 337 720 B1**
(45) Veröffentlichungstag und Bekanntmachung des Hinweises auf die Patenterteilung: **04.12.2024**
(21) Anmeldenummer: 16757869.9
(22) Anmeldetag: 25.08.2016
(51) Int. Cl.: B62M 6/45, B62M 6/50, B62M 6/55, B62K 19/30, B62K 23/02, B62K 23/06, A63F 13/20

(54) **ELEKTROFAHRRAD**
ELECTRIC BICYCLE
VÉLO ÉLECTRIQUE

(30) Priorität: 25.08.2015 DE 102015216188; 25.08.2015 DE 102015216186; 25.08.2015 DE 102015216178
(43) Veröffentlichungstag der Anmeldung: 27.06.2018
(73) Patentinhaber: Biketec GmbH, 4950 Huttwil (CH)
(72) Erfinder: DURDEVIC, Ivica, 4950 Huttwil (CH); STUDER, Lukas Beat, 4623 Neuendorf (CH); SUTER, Philipp Walter, 6032 Emmen (CH); LANZ, Simon, 4955 Gondiswil (CH); WOODTLI, Robin, 4500 Solothurn (CH); WOELK, Timo, 83730 Fischbachau (DE); AFZAL, Omar, 81379 München (DE)
(74) Vertreter: Isarpatent
(86) Internationale Anmeldenummer: PCT/EP2016/070085
(87) Internationale Veröffentlichungsnummer: WO 2017/032836

(56) Entgegenhaltungen:
- EP-A1- 2 868 563
- CN-U- 204 077 923
- DE-U1- 202013 002 491
- JP-A- 2000 163 215
- TW-A- 201 524 838
- US-A1- 2004 039 522
- US-A1- 2008 015 017
- US-A1- 2008 180 233
- US-A1- 2012 049 483
- US-A1- 2012 159 328
- US-A1- 2015 100 204
- US-B1- 6 204 752

## Beschreibung

Die vorliegende Erfindung betrifft ein Elektrofahrrad gemäß dem Oberbegriff des Anspruchs 1.

Elektrofahrräder, beispielsweise Pedelecs oder E-Bikes, erfreuen sich als leicht zu handhabendes, emissionsfreies Fortbewegungsmittel großer Beliebtheit. Für unterschiedliche Einsatzfelder sind besonders geeignete Fahrradtypen verfügbar. Hierzu gehören u.a. für den Freizeiteinsatz oder den Weg zur Arbeit auf der Straße oder im leichten Gelände optimierte Fahrräder (bspw. Citybikes oder Tourenbikes) und die für den Einsatz im Gelände und speziell auch bergigem Gelände entwickelten E-Mountainbikes (E-MTB) in verschiedenen Ausführungen. Elektrofahrräder bieten die Möglichkeit ohne Überbeanspruchung des Fahrers den Einsatzradius zu vergrößern und die durchschnittliche Fahrgeschwindigkeit zu erhöhen.

Aus dem Stand der Technik sind Elektrofahrräder bekannt, welche neben einer Antriebseinheit und einer Batterieeinheit auch eine Anzeigeeinheit und eine Fernbedienungseinheit (engl. Remote) für die Anzeigeeinheit aufweisen. Die Fernbedienungseinheit ist im Bereich eines Lenkergriffes entfernt von der Anzeigeeinheit angeordnet und mit Unterstützungswahltasten für die Wahl der Unterstützungsstufe des Elektroantriebs versehen. Ferner weist die Fernbedienungseinheit ein Eingabegerät zur Menü-Navigation und Auswahl von auf der Anzeigeeinheit dargestellten Menüpunkten auf. Nachteilig bei derartigen Fernbedienungseinheiten ist, dass die häufig verwendeten Unterstützungswahltasten sowie das Eingabegerät nebeneinander angeordnet und daher nicht ergonomisch vom Daumen des Fahrers betätigbar sind. Häufig ist ein sicherheitskritisches Umgreifen des Fahrers zur Bedienung des Eingabegeräts notwendig. Derartige Anzeigeeinheiten und Fernbedienungseinheiten werden etwa in der US 2012/049483 A1 sowie der US 6 204 752 B1 beschrieben. Dokument US 6 204 752 B1 offenbart den Oberbegriff des Anspruchs 1.

Der Erfindung liegt daher die Aufgabe zugrunde, ein neuartiges Elektrofahrrad bereitzustellen, welche elektrisch unterstützte Mobilität mit den Ansprüchen sportlich und Lifestyle-orientierter Radfahrer in Übereinstimmung bringt.

Diese Aufgabe wird durch ein Elektrofahrrad gemäß dem Anspruch 1 gelöst.

Ein erfindungsgemäßes Elektrofahrrad mit einer Fernbedienungseinheit für die Anzeigeeinheit des Elektrofahrrads ist im Bereich eines Lenkergriffes entfernt von der Anzeigeeinheit angeordnet und weist Unterstützungswahltasten für die Wahl der Unterstützungsstufe, eine Schaltwippe zur Gangwahl sowie zumindest ein Eingabegerät zur Menü-Navigation und Auswahl von auf der Anzeigeeinheit dargestellten Menüpunkten auf. Erfindungsgemäß verlaufen in Richtung der Lenkergriffachse betrachtet Eingabegerät, Unterstützungswahltasten und Schaltwippe vorzugsweise entlang einer konvex bogenförmigen gemeinsamen Linie, deren Krümmungsverlauf ergonomisch an den Bewegungsbereich des Fahrerdaumens angepasst ist. Das Eingabegerät und die Tasten sind vorzugsweise untereinander derart angeordnet, dass diese mit dem Daumen des Fahrers ergonomisch bedienbar sind. Ein sicherheitskritisches Umgreifen des Fahrers ist zur Bedienung von Unterstützungswahltasten und Eingabegerät nicht erforderlich.

Bei einem besonders bevorzugten Ausführungsbeispiel der Erfindung ist das Eingabegerät als Joystick ausgebildet. Die Menü-Navigation und Auswahl von auf der Anzeigeeinheit dargestellten Menüpunkten kann dadurch intuitiv und ergonomisch bevorzugt mit dem Daumen des Fahrers erfolgen.

Der Joystick ist vorzugsweise in alle vier Richtungen beweglich (nach oben und unten; nach links und rechts), wobei die Auswahl/Selektion von Menüpunkten mittels Druck auf den Joystick erfolgt (Druckfunktion). Die Menü-Navigation und Auswahl der Menüpunkte erfolgt mit dem multifunktionalen Joystick, so dass keine weiteren Bedienelemente erforderlich sind. Die Fernbedienungseinheit ist dadurch äußerst kompakt und ästhetisch ansprechend ausgebildet. Der Joystick kann ein hinterleuchtetes Symbol, insbesondere ein Rechteck mit abgerundeten Ecken aufweisen.

Erfindungsgemäß sind die Unterstützungswahltasten zueinander geneigt angeordnet. Die Wahl der Unterstützungsstufe kann hierbei ergonomisch mit dem Daumen des Fahrers erfolgen. Die Unterstützungswahltasten bilden vorzugsweise einen konkaven Abschnitt aus. Der Daumen kann zwischen den übereinander angeordneten Tasten ruhen, so dass die Betätigung intuitiv erfolgt, wobei die Unterstützungswahltaste zur Erhöhung der Unterstützungsstufe vorzugsweise in Fahrtrichtung vorne und die Unterstützungswahltaste zur Verringerung der Unterstützungsstufe in Fahrtrichtung hinten angeordnet ist.

Weiterhin wird es bevorzugt, wenn die Unterstützungswahltasten in Richtung der Hand des Fahrers geneigt angeordnet sind. Die Bedienung kann ergonomisch bevorzugt mit dem Daumen des Fahrers erfolgen.

Die Unterstützungswahltaste zur Erhöhung der Unterstützungsstufe ist vorzugsweise mit einem Plus-Symbol und die Unterstützungswahltaste zur Verringerung der Unterstützungsstufe mit einem Minus-Symbol gekennzeichnet. Die Symbole sind vorzugsweise hinterleuchtet und dadurch auch bei schlechten Sichtverhältnissen erkennbar.

Als fertigungstechnisch und für die Bedienung vorteilhaft hat es sich erwiesen, wenn der freie, Betätigungsabschnitt der Hand des Fahrers zugewandt angeordnet ist.

Gemäß einer bevorzugten Ausführungsform der Erfindung ist ein Lichtschalter im Bereich zwischen den Unterstützungswahltasten seitlich versetzt angeordnet. Vorzugsweise ist der Lichtschalter in Richtung entfernt von der Hand des Fahrers neben den Unterstützungswahltasten angeordnet. Als besonders ergonomisch hat es sich erwiesen, wenn der Lichtschalter mittig zwischen den Unterstützungswahltasten seitlich versetzt angeordnet ist.

Der Lichtschalter weist bevorzugt drei Funktionen auf, welche jeweils durch Tastendruck sequentiell aktiviert werden: Taste gedrückt halten (>2s) Licht ein/aus; Tastendruck Abblendlicht, zweiter Tastendruck Licht aufblenden. Vorteil daher eine Taste für Light On/Low/High/Off. Der Lichtschalter kann ein hinterleuchtetes Lichtsymbol aufweisen.

Bei Elektrofahrrädern mit einer elektronischen Schaltung des Motorgetriebes weist die Fernbedienungseinheit vorzugsweise eine mittig entlang einer Schwenkachse gelagerte Schaltwippe zur Gangwahl auf. Erfindungsgemäß vorteilhaft ist es, wenn die Schaltwippe zwei Betätigungsflächen aufweist, wobei eine erste Betätigungsfläche auf einer der Hand des Fahrers zugewandten Seite und eine zweite Betätigungsfläche auf einer der Hand des Fahrers abgewandten Seite angeordnet ist. Eingabegerät, Unterstützungswahltasten und Schaltwippe sind vorzugsweise entlang einer gemeinsamen Linie angeordnet. Die Tasten sind vorzugsweise untereinander derart angeordnet, dass diese mit dem Daumen des Fahrers ergonomisch bedienbar sind. Ein sicherheitskritisches Umgreifen des Fahrers ist zur Bedienung von Unterstützungswahltasten, Eingabegerät und Schaltwippe nicht erforderlich.

Bei einer bevorzugten Ausführungsform der Fernbedienungseinheit hat diese ein Oberteil und ein modular auswechselbares Unterteil, wobei die Schaltwippe dem Unterteil zugeordnet ist. Die Fernbedienungseinheit ist daher modular an Fahrräder mit und ohne elektrisches Motorgetriebe anpassbar. Hierzu wird wahlweise ein als Schellenhälfte ausgebildete Unterteil mit bzw. ohne Schaltwippe montiert. Ein Befestigungsabschnitt des Oberteil und des Unterteil umgreift vorzugsweise jeweils halb den Lenker. Oberteil und Unterteil sind vorzugsweise elektrisch mittels eines Flexbands verbunden.

Die Schaltwippe hat vorzugsweise eine etwa mittig angeordnete Automatik-Taste. Die Automatik-Taste wippt bevorzugt nicht mit und aktiviert die automatische Gangwahl. Beispielsweise den ersten oder zweiten Gang des Motorgetriebes.

In Richtung der Lenkergriffachse betrachtet verlaufen Eingabegerät, Unterstützungswahltasten und Schaltwippe vorzugsweise entlang einer konvex bogenförmigen gemeinsamen Linie, deren Krümmungsverlauf ergonomisch an den Bewegungsbereich des Fahrerdaumens angepasst ist.

Die Fernbedienungseinheit hat vorzugsweise einen Vibrationsmotor. Beispielsweise kann mittels einer kurzen Vibration das Erreichen der höchsten Unterstützungsstufe signalisiert werden. Ferner kann mittels einer kurzen Vibration ein Schaltvorgang vorgeschlagen werden. Vorzugsweise erfolgt ein Gangvorschlag auf der Anzeigeeinheit, bspw. Pfeil nach oben auf Display als Vorschlag hochzuschalten, wobei die Vibration den Fahrer aufmerksam macht, dass die Anzeigeeinheit eine neue Information zeigt.

Bei einem besonders bevorzugten Ausführungsbeispiel der Erfindung sind ferner eine elektronische Steuereinheit, eine Antriebseinheit und eine Batterieeinheit vorgesehen. Als besonders vorteilhaft hat es ich erwiesen, wenn die elektronische Steuereinheit im Sitzrohr des Fahrradrahmens angeordnet ist. Dadurch wird eine hochintegrierte Interaktion zwischen Rahmen und Einbauelementen erreicht. Die Bauweise der insbesondere im Unterrohr des Fahrradrahmens angeordneten Batterieeinheit ist nicht eingeschränkt und es steht mehr Bauraum für die Batteriezellen und damit eine hohe Reichweite zur Verfügung. Aufgrund der thermischen Entkoppelung von Batterieeinheit und elektronischer Steuereinheit wird ein hoher Wirkungsgrad erreicht. Spezielle Batteriegehäuse mit Befestigungsmöglichkeit für die Steuereinheit sind nicht erforderlich. Insgesamt wird bei dieser Variante eine kompakte, homogene Rahmenform höchster Festigkeit erreicht. Das erfindungsgemäße Konzept wird daher auch den Ansprüchen eines lifestyle betonten, sportlich ambitionierten Fahrers gerecht.

Als besonders vorteilhaft hat es sich erwiesen, wenn die elektronische Steuereinheit im unteren Bereich des Sitzrohrs benachbart zur Antriebseinheit angeordnet ist. Dadurch ist die elektrische Leitungslänge auf ein Minimum reduziert. Das Elektrofahrrad hat dadurch einen optimierten Rahmenquerschnitt mit konstruktiv und ästhetisch besten Eigenschaften bei optimiertem Bauraumbedarf.

Bei einem bevorzugten Ausführungsbeispiel ist die elektronische Steuereinheit am rahmenseitigen Antriebsträger (Motorbracket) der Antriebseinheit befestigt. Dadurch werden keine weiteren Befestigungselemente benötigt. Eine Gewichtsreduzierung kann erreicht werden.

Die elektronische Steuereinheit ist vorzugsweise lediglich an einem der Antriebseinheit zugewandten Endabschnitt mit Leitungsanschlüssen versehen, so dass der Aufbau vereinfacht und die Leitungslängen minimal sind. Alle Leitungen werden vorzugsweise im Rahmen unten herausgeführt.

Gemäß einer besonders bevorzugten Ausführungsform der Erfindung ist oberhalb der elektronischen Steuereinheit zumindest ein Anschlag, insbesondere ein Befestigungselement der Flaschenhalterung, bspw. eine Flaschenhalterbuchse, für die Sattelstütze angeordnet. Dadurch ist verhindert, dass die elektronische Steuereinheit von einer langen Sattelstütze beschädigt werden kann.

Vorzugsweise sind zumindest eine Signalleitung der Fernbedienungseinheit mit der Anzeigeeinheit und mindestens eine elektrische Leitung der Anzeigeeinheit mit der elektronischen Steuereinheit verbunden. Als besonders vorteilhaft hat es sich erwiesen, wenn lediglich eine Sammelleitung zwischen der Fernbedienungseinheit und der Anzeigeeinheit vorgesehen ist. Ferner ist es besonders vorteilhaft, wenn lediglich eine Sammelleitung zwischen der Anzeigeeinheit und der elektronischen Steuereinheit vorgesehen ist. Die Anzahl der zu verlegenden Leitungen und damit Gewicht sowie Montageaufwand sind daher minimiert.

Besonders vorteilhaft ist es, wenn die Bremssignalleitungen unmittelbar mit der Anzeigeeinheit verbunden sind. Dadurch ist lediglich eine elektrische Leitung zwischen der elektronischen Steuereinheit und der Anzeigeeinheit erforderlich. Die Anzahl der Leitungen ist reduziert. Bei der Bremsbetätigung wird das Bremslicht aktiviert.

Entsprechend wird es bevorzugt, wenn die Fernbedienungseinheit mit einem einzelnen Sammelkabel, welches mehrere Signalleitungen beinhaltet, mit der Anzeigeeinheit verbunden ist.

Gemäß eines besonders bevorzugten Ausführungsbeispiels der Erfindung sind Sensorleitungen jeweils unmittelbar mit der elektronischen Steuereinheit verbunden. Die Anzahl der Leitungen ist hierbei ebenfalls reduziert. Hierbei können insbesondere vorgesehen sein: Sensor des Seitenständers (Sicherheitsdeaktivierung bei heruntergeklapptem Ständer), Sensor des Getriebes, Beschleunigungssensoren (3D-Gyro und Accelometer), Sensor zur Erfassung einer Fahrradfaltung bei Falträdern, Drucksensoren und Temperatursensoren.

Die Kommunikation erfolgt vorzugsweise mittels CAN-Bus-Verfahren, besonders bevorzugt CAN-Open-Verfahren. Ein CAN-Translator ist bei Anpassungserfordernissen vorgesehen.

Die Erfindung kann universell bei allen Typen von Fahrrädern, insbesondere bei Mountainbikes (sowohl in Hardtail- oder Full-Suspension-Bauweise), aber auch bei anderen Fahrrädern, bspw. Straßenrad-Rahmen realisiert werden und somit letztlich ein Touren-, City- oder Cross-Rad oder andere moderne Fahrradtypen ergeben. Sie ermöglicht aufgrund der kompakten, formschönen Bauweise den Aufbau von Rädern, die weitgehend die Vorzüge eines klassischen Fahrrads und eines Elektrofahrrads in sich vereinen.

Weitere bevorzugte Ausführungsformen sind Gegenstand der Unteransprüche.

Im Folgenden wird eine bevorzugte Ausführungsform der vorliegenden Erfindung unter Bezugnahme auf die beiliegenden Zeichnungen näher erläutert. Dabei zeigen die Zeichnungen im Einzelnen:
Figur 1 eine Seitenansicht eines erfindungsgemäßen Elektrofahrrads,
Figur 2 eine Detaildarstellung des Elektrofahrrads aus Figur 1 im Bereich des Fahrradlenkers,
Figur 3 eine Detaildarstellung der Fernbedienungseinheit am Lenker,
Figur 4 eine Seitenansicht der Fernbedienungseinheit am Lenker,
Figur 5 eine weitere Detaildarstellung der Fernbedienungseinheit und
Figur 6 eine weitere Detaildarstellung der Fernbedienungseinheit.

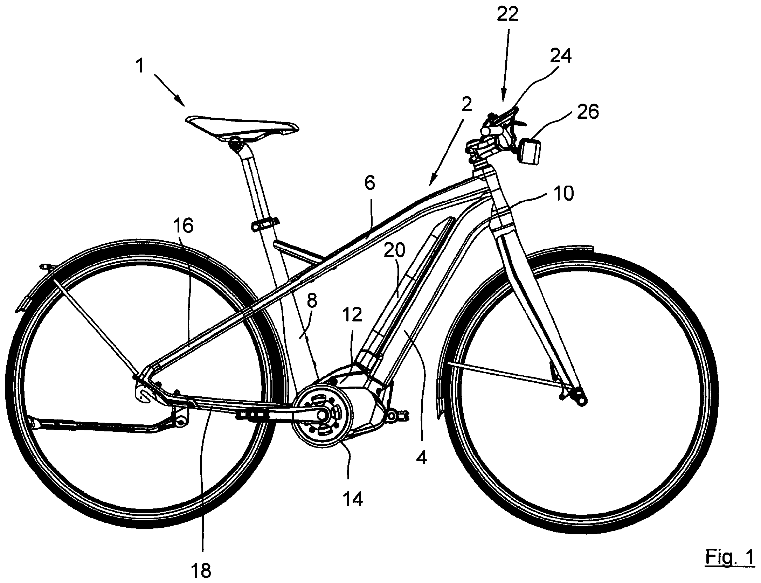

Figur 1 zeigt eine Seitenansicht eines erfindungsgemäßen Elektrofahrrads 1 mit einem exemplarisch als Diamantrahmen ausgebildeten Fahrradrahmen 2 mit einem Unterrohr 4, einem Oberrohr 6, einem Sitzrohr 8, einem Steuerrohr 10, einem Antriebsträger 12 für eine Antriebseinheit 14 sowie Sattelstreben 16 und Unterstreben 18 sowie eine Batterieeinheit 20.

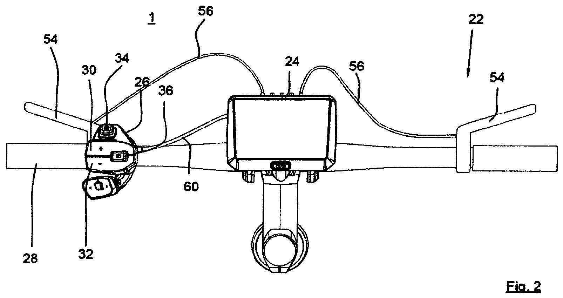

Wie insbesondere Figur 2 zu entnehmen ist, welche eine Detaildarstellung des Elektrofahrrads 1 aus Figur 1 im Bereich des Fahrradlenkers 22 zeigt, ist eine mittig auf dem Lenker 22 angeordnete Anzeigeeinheit 24 und eine Fernbedienungseinheit 26 vorgesehen. Die Fernbedienungseinheit 26 ist im Bereich eines linken Lenkergriffes 28 entfernt von der Anzeigeeinheit 24 angeordnet und weist zwei Unterstützungswahltasten 30, 32 für die Wahl der Motor-Unterstützungsstufe sowie ein als Joystick 34 ausgebildetes Eingabegerät zur Menü-Navigation und Auswahl von auf der Anzeigeeinheit 24 dargestellten Menüpunkten auf.

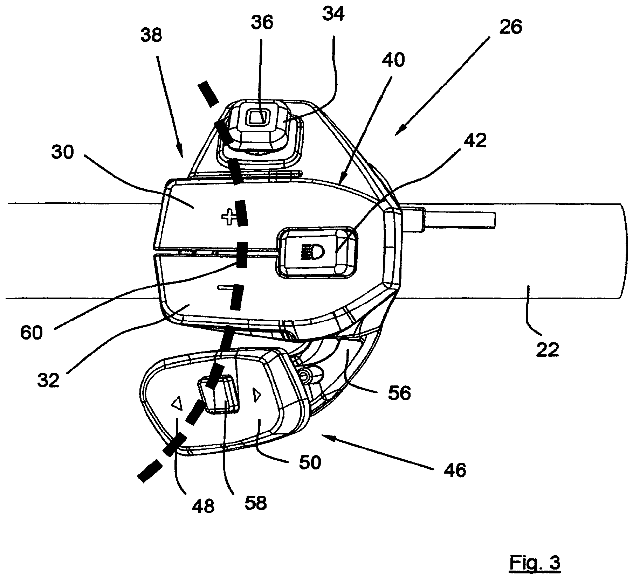

Gemäß Figur 3, welche eine Detaildarstellung der Fernbedienungseinheit 26 am Lenker 22 zeigt, sind Eingabegerät 34 und Unterstützungswahltasten 30, 32 entlang einer gemeinsamen Linie 60 angeordnet. Der Joystick 34 und die Tasten 30, 32 sind untereinander derart angeordnet, dass diese mit dem Daumen des Fahrers ergonomisch bedienbar sind. Ein sicherheitskritisches Umgreifen des Fahrers ist zur Bedienung von Unterstützungswahltasten 30, 32 und Joystick 34 nicht erforderlich.

Der Joystick 34 ist quadratisch mit pilzförmig abgerundeten Kanten ausgebildet und in alle vier Richtungen beweglich (nach oben und unten; nach links und rechts), wobei die Auswahl/Selektion von Menüpunkten mittels Druck auf den Joystick 34 erfolgt (Druckfunktion). Die Menü-Navigation und Auswahl der Menüpunkte erfolgt mit dem multifunktionalen Joystick 34, so dass keine weiteren Bedienelemente erforderlich sind. Die Fernbedienungseinheit 26 ist dadurch äußerst kompakt und ästhetisch ansprechend ausgebildet. Der Joystick 34 weist ein rahmenartig hinterleuchtetes Symbol 36, insbesondere ein Rechteck mit abgerundeten Ecken auf.

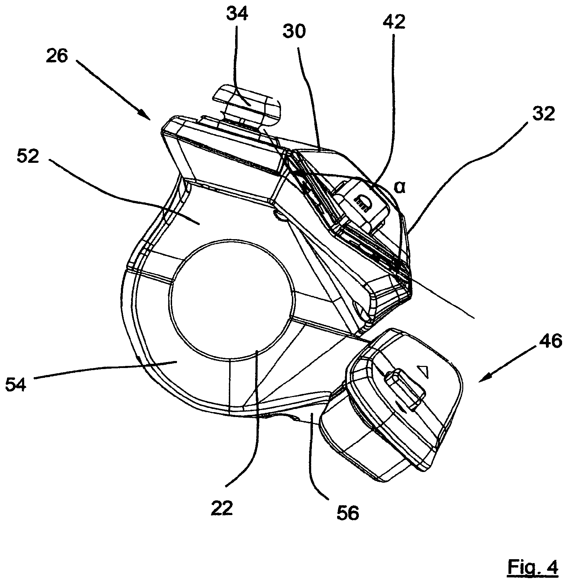

Wie insbesondere Figur 4 zu entnehmen ist, welche eine Seitenansicht der Fernbedienungseinheit 26 am Lenker 22 zeigt, sind die Unterstützungswahltasten 30, 32 zueinander unter einem Winkel α im Bereich von etwa 120° bis 170°, vorzugsweise von etwa 155° geneigt angeordnet. Die Wahl der Unterstützungsstufe kann hierbei ergonomisch mit dem Daumen des Fahrers erfolgen. Die Unterstützungswahltasten 30, 32 bilden einen konkaven Abschnitt aus. Der Daumen kann zwischen den übereinander angeordneten Tasten 30, 32 ruhen, so dass die Betätigung intuitiv erfolgt, wobei die Unterstützungswahltaste 30 zur Erhöhung der Unterstützungsstufe in Fahrtrichtung vorne oben und die Unterstützungswahltaste 32 zur Verringerung der Unterstützungsstufe in Fahrtrichtung hinten und unterhalb angeordnet ist. Ferner sind die Unterstützungswahltasten 30, 32 in Richtung der Hand des Fahrers abfallend geneigt angeordnet sind. Die Bedienung kann ergonomisch bevorzugt mit dem Daumen des Fahrers erfolgen.

Die Unterstützungswahltaste 30 zur Erhöhung der Unterstützungsstufe ist mit einem Plus-Symbol und die Unterstützungswahltaste 32 zur Verringerung der Unterstützungsstufe mit einem Minus-Symbol gekennzeichnet (siehe Figur 3). Die Symbole sind hinterleuchtet und dadurch auch bei schlechten Sichtverhältnissen erkennbar.

Als fertigungstechnisch und für die Bedienung vorteilhaft hat es sich erwiesen, wenn die Unterstützungswahltasten 30, 32 der Fernbedienungseinheit 26 einen freien, der Hand des Fahrers zugewandten Betätigungsabschnitt 38 sowie einen elastisch ausgebildeten gemeinsamen Endabschnitt 40 aufweisen.

Die Fernbedienungseinheit 26 hat ferner einen breitformatig rechteckigen Lichtschalter 42 der im Bereich zwischen den Unterstützungswahltasten 30, 32 mittig, seitlich versetzt angeordnet ist. Der Lichtschalter 42 ist in Richtung entfernt von der Hand des Fahrers neben den Unterstützungswahltasten 30, 32 im Bereich derer Endabschnitte 40 angeordnet.

Der Lichtschalter 42 weist bevorzugt drei Funktionen auf, welche jeweils durch Tastendruck sequentiell aktiviert werden: Taste gedrückt halten (>2s) Licht ein/aus; Tastendruck Abblendlicht, zweiter Tastendruck Licht aufblenden. Vorteil daher eine Taste für Light On/Low/High/Off. Der Lichtschalter weist ein hinterleuchtetes Lichtsymbol auf.

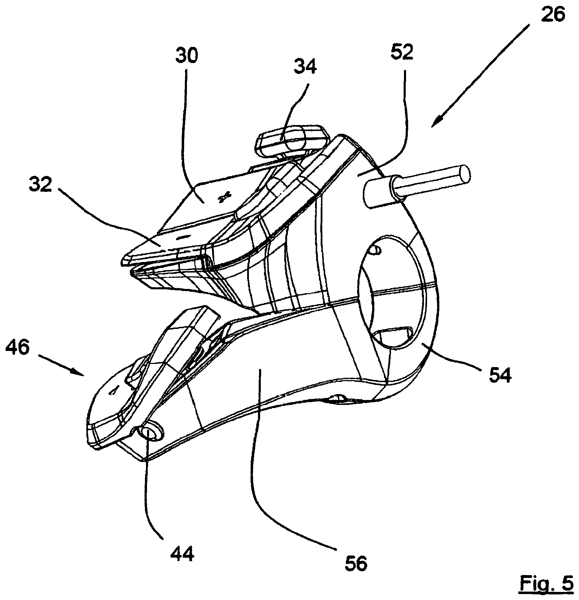

Wie insbesondere Figur 5 zu entnehmen ist, welche eine weitere Detaildarstellung der Fernbedienungseinheit 26 zeigt, ist das dargestellte Elektrofahrrad mit einer elektronischen Schaltung des Motorgetriebes versehen, wobei die Fernbedienungseinheit 26 eine mittig entlang einer Schwenkachse 44 gelagerte Schaltwippe 46 zur Gangwahl aufweist.

Die Schaltwippe 44 hat gemäß Figur 3 zwei Betätigungsflächen 48, 50, wobei eine erste Betätigungsfläche 48 auf einer der Hand des Fahrer zugewandten Seite und eine zweite Betätigungsfläche 50 auf einer der Hand des Fahrers abgewandten Seite angeordnet ist. Joystick 36, Unterstützungswahltasten 30, 32 und Schaltwippe 46 sind entlang einer gemeinsamen Linie 60 angeordnet. Die Tasten sind untereinander derart angeordnet, dass diese mit dem Daumen des Fahrers ergonomisch bedienbar sind. Ein sicherheitskritisches Umgreifen des Fahrers ist zur Bedienung von Unterstützungswahltasten 30, 32, Joystick 36 und Schaltwippe 46 nicht erforderlich.

Wie insbesondere in den Figuren 4 und 5 dargestellt ist, hat die Fernbedienungseinheit 26 ein Oberteil 52 und ein modular auswechselbaren Unterteil 54, wobei die Schaltwippe 46 einem sich bogenförmig gekrümmt in Richtung der Hand des Fahrers erstreckenden Tragarm 56 des Unterteils 54 zugeordnet ist. Die Fernbedienungseinheit 26 ist daher modular an Fahrräder mit und ohne elektrisches Motorgetriebe anpassbar. Hierzu wird ein als Schellenhälfte ausgebildete Unterteil mit bzw. ohne Schaltwippe montiert. Die Version ohne Schaltwippe ist nicht dargestellt. Hierbei entfällt auch der Tragarm. Oberteil 52 und Unterteil 54 sind elektrisch mittels eines innenliegenden Flexbands verbunden (nicht dargestellt).

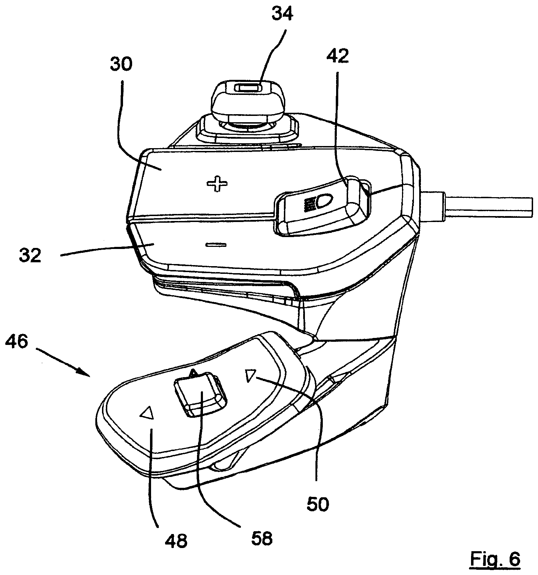

Wie insbesondere Figur 6 zu entnehmen ist, welche eine weitere Detaildarstellung der Fernbedienungseinheit 26 zeigt, hat die Schaltwippe 46 eine etwa mittig angeordnete, quadratische Automatik-Taste 58. Die Automatik-Taste 58 wippt nicht mit der Wippe 46 und aktiviert die automatische Gangwahl.

In Richtung der Lenkergriffachse betrachtet verlaufen Joystick 34, Unterstützungswahltasten 30, 32 und Schaltwippe 46 entlang einer konvex bogenförmigen gemeinsamen Linie 60 (gestrichelte Linie in Figur 5), deren Krümmungsverlauf ergonomisch an den Bewegungsbereich des Fahrerdaumens angepasst ist.

Die Erfindung kann universell bei allen Typen von Fahrrädern, insbesondere bei Mountainbikes (sowohl in Hardtail- oder Full-Suspension-Bauweise), aber auch bei anderen Fahrrädern, bspw. Straßenrad-Rahmen realisiert werden und somit letztlich ein Touren-, City- oder Cross-Rad oder andere moderne Fahrradtypen ergeben. Sie ermöglicht aufgrund der kompakten, formschönen Bauweise den Aufbau von Rädern, die weitgehend die Vorzüge eines klassischen Fahrrads und eines Elektrofahrrads in sich vereinen.

Die Ausführung der Erfindung ist nicht auf die in den Figuren gezeigten und oben erläuterten Beispiele beschränkt, sondern ebenso in einer Vielzahl von Abwandlungen eines Fachmanns möglich.

Offenbart ist eine Fernbedienungseinheit 26 für die Anzeigeeinheit 24 eines Elektrofahrrads 1, wobei die Fernbedienungseinheit 26 im Bereich eines Lenkergriffes 28 entfernt von der Anzeigeeinheit 24 angeordnet ist und Unterstützungswahltasten 30, 32 für die Wahl der Unterstützungsstufe sowie zumindest ein Eingabegerät 34 zur Menü-Navigation und Auswahl von auf der Anzeigeeinheit 24 dargestellten Menüpunkten aufweist. Erfindungsgemäß sind Eingabegerät 34 und Unterstützungswahltasten 30, 32 entlang einer gemeinsamen Linie 60 angeordnet. Weiterhin offenbart ist ein Elektrofahrrad 1 mit einer derartigen Fernbedienungseinheit 26.

### Bezugszeichenliste

- 1: Elektrofahrrad
- 2: Fahrradrahmen
- 4: Unterrohr
- 6: Oberrohr
- 8: Sitzrohr
- 10: Steuerrohr
- 12: Antriebsträger
- 14: Antriebseinheit
- 16: Sattelstrebe
- 18: Unterstrebe
- 20: Batterieeinheit
- 22: Lenker
- 24: Anzeigeeinheit
- 26: Fernbedienungseinheit
- 28: linker Lenkergriff
- 30: Unterstützungswahltaste
- 32: Unterstützungswahltaste
- 34: Joystick
- 36: Symbol
- 38: Betätigungsabschnitt
- 40: Endabschnitt
- 42: Lichtschalter
- 44: Schwenkachse
- 46: Schaltwippe
- 48: Betätigungsfläche
- 50: Betätigungsfläche
- 52: Oberteil
- 54: Unterteil
- 56: Tragarm
- 58: Automatik-Taste
- 60: Linie

## Patentansprüche

1. Elektrofahrrad mit einer Fernbedienungseinheit für die Anzeigeeinheit (24) des Elektrofahrrads (1), wobei die Fernbedienungseinheit (26) im Bereich eines Lenkergriffes (28) entfernt von der Anzeigeeinheit (24) angeordnet ist und Unterstützungswahltasten (30, 32) für die Wahl der Unterstützungsstufe, eine Schaltwippe (46) zur Gangwahl sowie zumindest ein Eingabegerät (34) zur Menü-Navigation und Auswahl von auf der Anzeigeeinheit (24) dargestellten Menüpunkten aufweist, **dadurch gekennzeichnet dass** in Richtung der Lenkergriffachse betrachtet verlaufen das Eingabegerät (34), die Unterstützungswahltasten (30, 32) und die Schaltwippe (46) entlang einer konvex bogenförmigen gemeinsamen Linie (60) deren Krümmungsverlauf ergonomisch an den Bewegungsbereich des Fahrerdaumens angepasst ist, und dass die Unterstützungswahltasten (30, 32) zueinander geneigt angeordnet sind und einen konkaven Abschnitt zur ergonomischen Bedienung mit dem Daumen eines Fahrers ausbilden.

2. Elektrofahrrad nach Anspruch 1, wobei das Eingabegerät als Joystick (34) ausgebildet ist.

3. Elektrofahrrad nach Anspruch 2, wobei der Joystick (34) in vier Richtungen beweglich ist und die Auswahl/Selektion von Menüpunkten mittels Druck auf den Joystick (34) erfolgt.

4. Elektrofahrrad nach einem der vorhergehenden Ansprüche, wobei die Unterstützungswahltasten (30, 32) einen freien Betätigungsabschnitt (38) sowie einen elastisch ausgebildeten Endabschnitt (40) aufweisen.

5. Elektrofahrrad nach einem der vorhergehenden Ansprüche, wobei ein Lichtschalter (42) im Bereich zwischen den Unterstützungswahltasten (30, 32) seitlich versetzt angeordnet ist.

6. Elektrofahrrad nach Anspruch 5, wobei der Lichtschalter (42) mehrere Funktionen aufweist, welche sequentiell durch Tastendruck aktiviert werden.

7. Elektrofahrrad nach einem der vorhergehenden Ansprüche, mit einer mittig entlang einer Schwenkachse (44) gelagerten Schaltwippe (46) zur Gangwahl.

8. Elektrofahrrad nach Anspruch 7, mit einem Oberteil (52) und einem modular auswechselbaren Unterteil (54), wobei die Schaltwippe (46) dem Unterteil (54) zugeordnet ist.

9. Elektrofahrrad nach einem der Ansprüche 7 oder 8, wobei die Schaltwippe (46) eine etwa mittig angeordnete Automatik-Taste (58) aufweist.

10. Elektrofahrrad nach einem der vorhergehenden Ansprüche, wobei die Fernbedienungseinheit (26) einen Vibrationsmotor aufweist.

## Claims

1. Electric bicycle having a remote control unit for the display unit (24) of the electric bicycle (1), wherein the remote control unit (26) is arranged in the region of a handlebar grip (28) at a distance from the display unit (24) and comprises assistance selection buttons (30, 32) for selecting the assistance level, a rocker switch (46) for gear selection and at least one input device (34) for menu navigation and selection of menu items that are displayed on the display unit (24), **characterised in that**, when viewed in the direction of the handlebar grip axis, the input device (34), the assistance selection buttons (30, 32) and the rocker switch (46) run along a convexly curved common line (60), the curvature of which is ergonomically adapted to the range of movement of the rider's thumb, and **in that** the assistance selection buttons (30, 32) are arranged at an angle to one another and form a concave section for ergonomic operation by the thumb of a rider.

2. Electric bicycle according to claim 1, wherein the input device is embodied as a joystick (34).

3. Electric bicycle according to claim 2, wherein the joystick (34) is movable in four directions and the selection of menu items is performed by means of pressing the joystick (34) .

4. Electric bicycle according to one of the preceding claims, wherein the assistance selection buttons (30, 32) comprise a free actuating section (38) and an end section (40) that is embodied in an elastic manner.

5. Electric bicycle according to one of the preceding claims, wherein a light switch (42) is arranged laterally offset in the region between the assistance selection buttons (30, 32) .

6. Electric bicycle according to claim 5, wherein the light switch (42) comprises a plurality of functions which are activated sequentially by pressing a button.

7. Electric bicycle according to one of the preceding claims, having a rocker switch (46), which is mounted centrally along a pivot axis (44), for gear selection.

8. Electric bicycle according to claim 7, having an upper part (52) and a lower part (54) that can be exchanged in a modular manner, wherein the rocker switch (46) is allocated to the lower part (54).

9. Electric bicycle according to one of claims 7 or 8, wherein the rocker switch (46) comprises an approximately centrally arranged automatic button (58).

10. Electric bicycle according to one of the preceding claims, wherein the remote control unit (26) comprises a vibration motor.

## Revendications

1. Vélo électrique comportant une unité de télécommande pour l'unité d'affichage (24) du vélo électrique (1), l'unité de télécommande (26) étant agencée à distance de l'unité d'affichage (24) dans la zone d'une poignée de guidon (28) et présentant des touches de sélection d'assistance (30, 32) pour la sélection du niveau d'assistance, une bascule de commutation (46) pour la sélection de la vitesse ainsi qu'au moins un appareil de saisie (34) pour la navigation dans le menu et la sélection d'options de menu représentées sur l'unité d'affichage (24), **caractérisé en ce que**, vus dans la direction de l'axe de la poignée de guidon, l'appareil de saisie (34), les touches de sélection d'assistance (30, 32) et la bascule de commutation (46) s'étendent le long d'une ligne (60) commune en arc convexe dont le tracé de courbure est adapté de manière ergonomique à la zone de mouvement du pouce du cycliste, et **en ce que** les touches de sélection d'assistance (30, 32) sont agencées inclinées l'une vers l'autre et forment une partie concave pour la commande ergonomique avec le pouce d'un cycliste.

2. Vélo électrique selon la revendication 1, dans lequel l'appareil de saisie est réalisé sous la forme d'un joystick (34).

3. Vélo électrique selon la revendication 2, dans lequel le joystick (34) est mobile dans quatre directions et le choix/la sélection d'options de menu s'effectue par pression sur le joystick (34).

4. Vélo électrique selon l'une des revendications précédentes, dans lequel les touches de sélection d'assistance (30, 32) présentent une partie actionnement (38) libre ainsi qu'une partie d'extrémité (40) réalisée de manière élastique.

5. Vélo électrique selon l'une des revendications précédentes, dans lequel un commutateur d'éclairage (42) est agencé décalé sur le côté dans la zone située entre les touches de sélection d'assistance (30, 32).

6. Vélo électrique selon la revendication 5, dans lequel le commutateur d'éclairage (42) présente plusieurs fonctions qui peuvent être activées de manière séquentielle par pression sur une touche.

7. Vélo électrique selon l'une des revendications précédentes, comportant une bascule de commutation (46) montée de manière centrale le long d'un axe de pivotement (44) pour la sélection de la vitesse.

8. Vélo électrique selon la revendication 7, comportant une partie supérieure (52) et une partie inférieure (54) susceptible d'être remplacée de manière modulaire, la bascule de commutation (46) étant associée à la partie inférieure (54) .

9. Vélo électrique selon l'une des revendications 7 ou 8, dans lequel la bascule de commutation (46) présente une touche automatique (58) agencée approximativement en son centre.

10. Vélo électrique selon l'une des revendications précédentes, dans lequel l'unité de télécommande (26) présente un moteur de vibration.
